Europäisches Patentamt

European Patent Office

Office européen des brevets

(19)

(11) Numéro de publication: **0 130 853**
**A1**

(12) # DEMANDE DE BREVET EUROPEEN

(21) Numéro de dépôt: **84400830.0**

(51) Int. Cl.⁴: **F 16 K 31/44**

(22) Date de dépôt: **25.04.84**

(30) Priorité: **26.04.83 FR 8307218**

(43) Date de publication de la demande: **09.01.85**
**Bulletin 85/2**

(84) Etats contractants désignés: **AT BE CH DE GB IT LI NL SE**

(71) Demandeur: **SAUNIER DUVAL EAU CHAUDE CHAUFFAGE S.D.E.C.C. - Société anonyme, 6, rue Lavoisier, F-93103 Montreuil (FR)**

(72) Inventeur: **Percebois, Alain, 6, rue Salvador Allende, F-54700 Blenod les Pont a Mousson (FR)**
Inventeur: **Schneider, André, 21, Allée P. Lallement Pré Latour, F-54700 Pont a Mousson (FR)**

(74) Mandataire: **Lhuillier, René, 6, rue Lavoisier Boîte Postale no. 89, F-93104 Montreuil Cédex (FR)**

(54) **Dispositif de commande de remplissage d'une enceinte fermée.**

(57) Corps coulissant (1) sur une tubulure (2) et une douille (3) reliées respectivement au réseau d'adduction d'eau sous pression, et à l'enceinte. Ce corps (1) contient un clabet d'arrêt (28) à ouverture commandée par la douille (3) qui renferme elle-même un clapet anti-retour (30).

0130853

1

La présente invention concerne un dispositif de commande de remplissage d'une enceinte fermée, notamment d'une installation de chauffage central à eau chaude.

Pour effectuer le remplissage et la mise en pression des installations de chauffage central à eau chaude, celles-ci sont reliées au réseau d'adduction d'eau sous pression par une canalisation munie d'un robinet d'arrêt. Si, au cours d'une opération de remplissage, la pression du réseau d'adduction d'eau chute de façon sensible par suite d'un incident affectant ce réseau, l'eau contenue dans l'installation peut s'écouler en sens inverse et polluer le réseau d'adduction d'eau. Pour éviter un tel retour d'eau polluée, un clapet anti-retour peut être installé entre le robinet d'arrêt et l'installation de chauffage. Mais si la chute de pression du réseau d'adduction est brutale, la dépression engendrée est telle qu'elle peut provoquer une légère fuite du clapet anti-retour polluant ainsi le réseau d'adduction d'eau par retour de l'eau contenue dans l'installation de chauffage central. Le même inconvénient se produit dans le cas où le clapet n'est pas étanche.

La Demanderesse s'est posé le problème de créer un dispositif de commande de remplissage d'une enceinte fermée assurant à la fois la fonction d'un robinet d'arrêt et d'un clapet anti-retour, permettant la mise en communication de cette enceinte avec un réseau d'adduction d'eau sous pression et évitant le retour de l'eau contenue dans cette enceinte vers le réseau d'adduction d'eau en cas de chute de pression dans ce dernier et assurant un contrôle permanent de l'étanchéité du clapet anti-retour et la fermeture automatique du dispositif de commande de remplissage, en fonctionnement normal.

A cet effet, la présente invention a pour objet un dispositif de commande de remplissage d'une enceinte fermée par un réseau d'adduction d'eau sous pression qui comporte un corps coulissant sur une tubulure et une douille reliées respectivement au réseau et à l'enceinte. Ce corps contient un clapet d'arrêt à ouverture commandée par la douille qui renferme elle-même un clapet anti-retour.

D'autres caractéristiques et avantages de l'invention apparaîtront à la lecture de la description ci-après, faite en référence aux dessins annexés donnés uniquement à titre d'exemple non limitatif et parmi lesquels :

- la Fig. 1 est une vue éclatée, en coupe diamétrale, d'un dispositif de commande de remplissage selon l'invention ;
- la Fig. 2 est une vue en coupe diamétrale, en position fermée, du dispositif de commande représenté à la Fig. 1 ;
- la Fig. 3 est une vue en coupe diamétrale, en position ouverte, du dispositif de commande représenté à la Fig. 1 ;
- la Fig. 4 est une vue éclatée en coupe d'une première variante de réalisation du dispositif selon l'invention ;
- la Fig. 5 est une vue en coupe, en position fermée, de la première variante de réalisation représentée à la Fig. 4 ;
- la Fig. 6 est une vue en coupe, en position ouverte, de la première variante de réalisation représentée à la Fig. 4 ;
- la Fig. 7 est une vue en coupe d'une seconde variante de réalisation du dispositif selon l'invention ;
- la Fig. 8 est une vue en coupe, sur laquelle ont été représentées rassemblées plusieurs autres variantes de réalisation du dispositif selon l'invention ;
- la Fig. 9 est une vue partielle en coupe d'un dispositif de déverrouillage manuel pouvant être monté sur le dispositif de commande objet de l'invention.

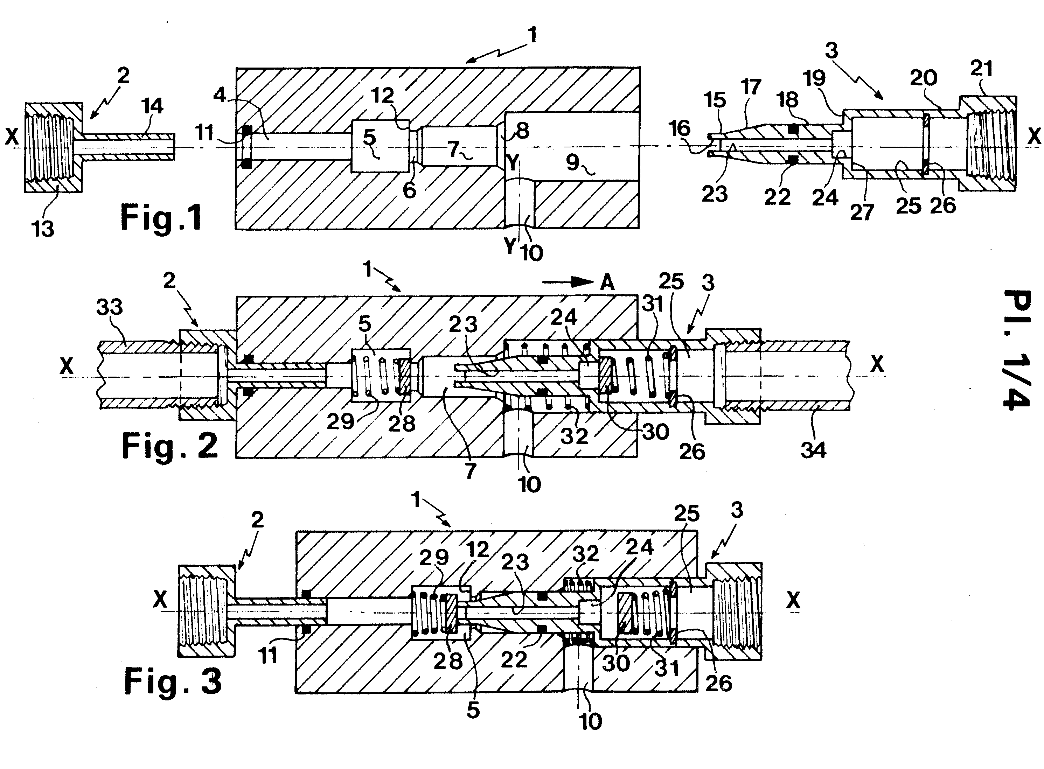

Le dispositif de commande et de remplissage d'une enceinte fermée selon l'invention représenté aux Fig. 1, 2 et 3 se compose essentiellement de trois pièces : un corps 1 coulissant sur une tubulure 2 et une douille 3.

Le corps 1 de forme générale cylindrique d'axe X-X comporte un canal central cylindrique 4 d'axe X-X débouchant dans une première chambre 5 cylindrique d'axe X-X qui se prolonge par un court canal cylindrique 6 d'axe X-X débouchant dans une seconde chambre 7 raccordée par un chanfrein 8 à une troisième chambre cylindrique 9. Un trou débouchant 10 d'axe Y-Y perpendiculaire à l'axe X-X est ménagé dans la paroi du corps 1. Un joint 11 est logé dans une rainure circulaire ménagée à l'extrémité du canal 4 opposée à la première chambre 5. Le raccordement de la chambre 5 et du canal 6 forme un épaulement servant de siège 12 pour un clapet.

La tubulure 2 d'axe X-X se compose d'une cuvette 13 filetée intérieurement prolongée par une partie tubulaire 14 dont le diamètre extérieur est très légèrement inférieur au diamètre intérieur du

3

canal 4 du corps 1.

La douille 3, d'axe X-X, comporte une partie cylindrique 15 d'extrémité dans laquelle est ménagée une fente diamétrale 16, prolongée par une partie tronconique 17 se raccordant à une partie cylindrique 18 dont le diamètre extérieur est très légèrement inférieur au diamètre intérieur de la seconde chambre 7. La partie cylindrique 18 est raccordée par un épaulement 19 à une partie cylindrique 20 dont le diamètre extérieur est très légèrement inférieur au diamètre intérieur de la troisième chambre 9. La douille 3 se termine par une partie cylindrique filetée intérieurement 21. Un joint 22 est logé dans une rainure circulaire extérieure ménagée dans la partie cylindrique 18 de la douille 3.

La douille 3 est percée d'un canal central 23 d'axe X-X, débouchant dans une première chambre 24 prolongée par une seconde chambre 25, de plus grand diamètre, dans lequel est placée une rondelle d'arrêt 26. Le raccordement des chambres 24 et 25, de diamètres différents, forme un épaulement jouant le rôle de siège 27 pour un clapet.

Le dispositif de remplissage selon l'invention est complété par (Fig. 2) :

- un clapet 28 contenu dans la chambre 5 et plaqué par un ressort 29 contre le siège 12 ;
- un clapet 30 contenu dans la chambre 25 et plaqué par un ressort 31 prenant appui sur la rondelle d'arrêt 26, contre le siège 27 ;
- un ressort 32, travaillant en compression, interposé entre le corps 1 et la douille 3, et prenant appui, d'une part, sur le fond de la chambre 9, d'autre part, sur l'épaulement extérieur 19 de la douille 3.

Le fonctionnement du dispositif objet de l'invention va être décrit maintenant.

Le dispositif est relié, d'une part, au réseau d'adduction d'eau par une canalisation 33 vissée dans la tubulure 2, d'autre part, à l'enceinte à remplir par une canalisation 34 vissée dans l'extrémité filetée 21 de la douille 3. La tubulure 2 et la douille 3 sont fixes, tandis que le corps 1 peut coulisser selon un mouvement de translation sur la partie tubulaire 14 de la tubulure 2 et sur les parties cylindriques 18 et 20 de la douille 3.

4

Sur la Fig. 2, le dispositif est représenté en position fermée. Il apparaît clairement que, sous l'action du ressort 29 et de la pression régnant dans la canalisation 33 reliée au réseau d'adduction d'eau sous pression, le clapet 28 est plaqué sur son siège 12 interdisant tout passage à l'eau.

Pour permettre le passage de l'eau de la canalisation 33 à la canalisation 34, il suffit à l'utilisateur d'imprimer un mouvement de translation au corps 1 suivant la flèche A et de le maintenir dans cette position. On se trouve alors dans la configuration représentée à la Fig. 3. L'extrémité 15 de la douille 3 fait saillie dans la première chambre 5 éloignant le clapet 28 de son siège 12 et permettant ainsi à l'eau, par la fente 16 et le canal 23, de gagner la chambre 24. Sous l'effet de la pression régnant dans le réseau d'adduction d'eau, le clapet 30 est éloigné de son siège livrant passage à l'eau qui gagne l'enceinte à remplir par la tubulure 34. Lorsque le remplissage est terminé, il suffit à l'utilisateur de lâcher le corps 1 qu'il maintenait dans la position représentée à la Fig. 3 pour que celui-ci, sous l'action du ressort 32 de rappel, reprenne sa position de fermeture représentée à la Fig. 2. Le clapet 28 porte à nouveau sur son siège 12, interrompant l'arrivée de l'eau du réseau d'adduction, tandis que le clapet 30, qui n'est plus sollicité par la pression de l'eau de ce réseau, se referme sous l'action du ressort 31.

Si, au cours du remplissage, la pression du réseau d'adduction d'eau chute pour une raison quelconque et devient inférieure à la pression régnant dans l'enceinte à remplir, le clapet 30 se referme sous l'action du ressort 31 et de la pression régnant dans l'enceinte. L'eau contenue à cet instant dans l'enceinte ne peut s'écouler en sens inverse, ce qui évite toute pollution du réseau d'adduction d'eau.

Il est à remarquer que le dispositif objet de l'invention permet, sans démontage, de savoir si les clapets 28 et 30 sont bien étanches. En effet, lorsque le dispositif est en position fermée (Fig. 2), si le clapet 28 fuit, l'eau du réseau pourra atteindre la seconde chambre 7, s'écouler ensuite par l'espace annulaire défini par le chanfrein 8 et la partie tronconique 17 de la douille 3 et atteindre le trou 10 par lequel elle s'écoulera à l'extérieur du corps 1 ; de même, si le clapet 30 fuit, l'eau contenue dans

5

l'enceinte pourra s'écouler par la chambre 24 et le canal 23 de la douille 3 pour atteindre la chambre 7 et de là le trou 10 par le même cheminement que précédemment. L'utilisateur est donc prévenu du mauvais état des clapets par un écoulement d'eau par le trou 10 du corps 1. De plus, lorsque le corps 1 est lâché par l'utilisateur, les deux clapets 28 et 30 sont en appui sur leurs sièges respectifs 12 et 27 assurant ainsi automatiquement la fermeture du dispositif de commande de remplissage qui sera maintenu fermé sans autre manoeuvre de la part de l'utilisateur.

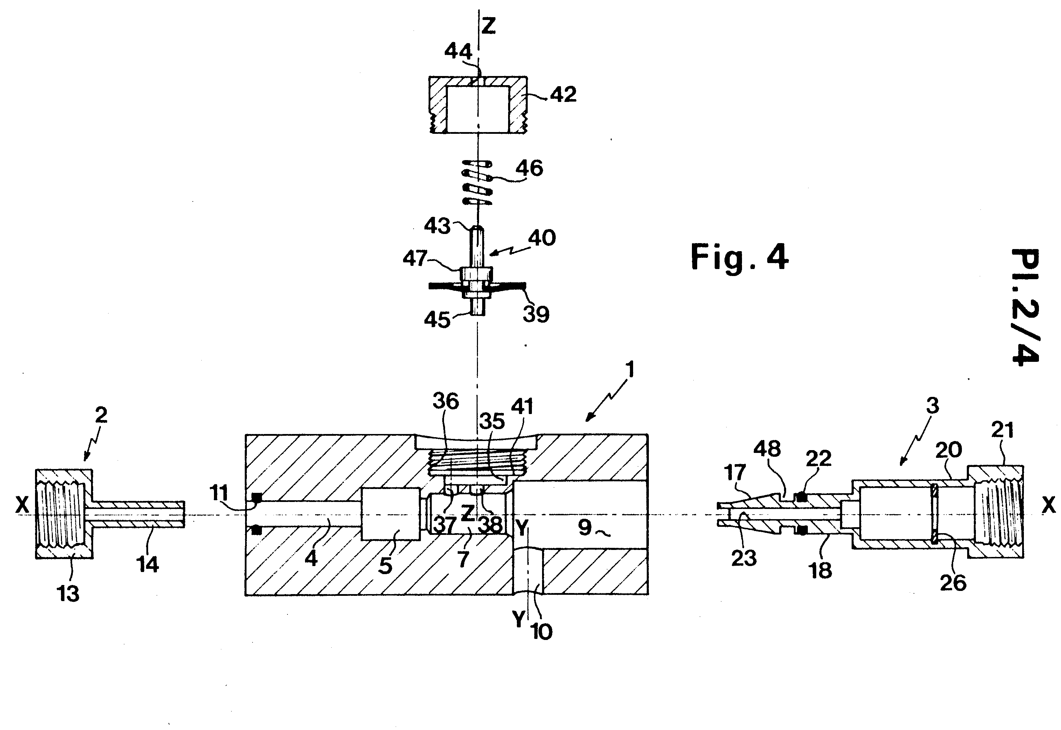

Il peut être envisagé une première variante du dispositif selon l'invention décrit précédemment, représentée aux Fig. 4, 5 et 6. Dans cette variante, le dispositif de remplissage se verrouille automatiquement en position fermée et son déverrouillage est réalisé automatiquement en fin de remplissage.

Dans cette variante, une chambre 35 cylindrique d'axe Z-Z, perpendiculaire à l'axe X-X, prolongée par une cuvette 36 filetée intérieurement est ménagée dans la paroi du corps 1 au niveau de la seconde chambre 7. Deux trous débouchants 37 et 38 sont percés dans le fond de la cuvette 35, mettant en relation celle-ci avec la seconde chambre 7. Une membrane 39 en élastomère, solidarisée à une tige 40, repose sur un épaulement 41 formé par le raccordement de la chambre 35 et de la cuvette 36 et est maintenue en place par une coupelle 42 vissée dans le filetage de la cuvette 36. La partie supérieure 43 de la tige 40 s'engage dans un trou 44 d'axe Z-Z ménagé dans la coupelle tandis que sa partie inférieure 45 est engagée dans le trou 38. Un ressort 46, réalisé pour développer un effort bien déterminé, est disposé concentriquement à la tige 40 entre le fond de la coupelle 42 et un collet 47 de la tige 40. Enfin, une saignée circonférentielle 48 de profil rectangulaire est ménagée dans la partie cylindrique 18 de la douille 3, à proximité du raccordement de cette partie 18 avec la partie tronconique 17.

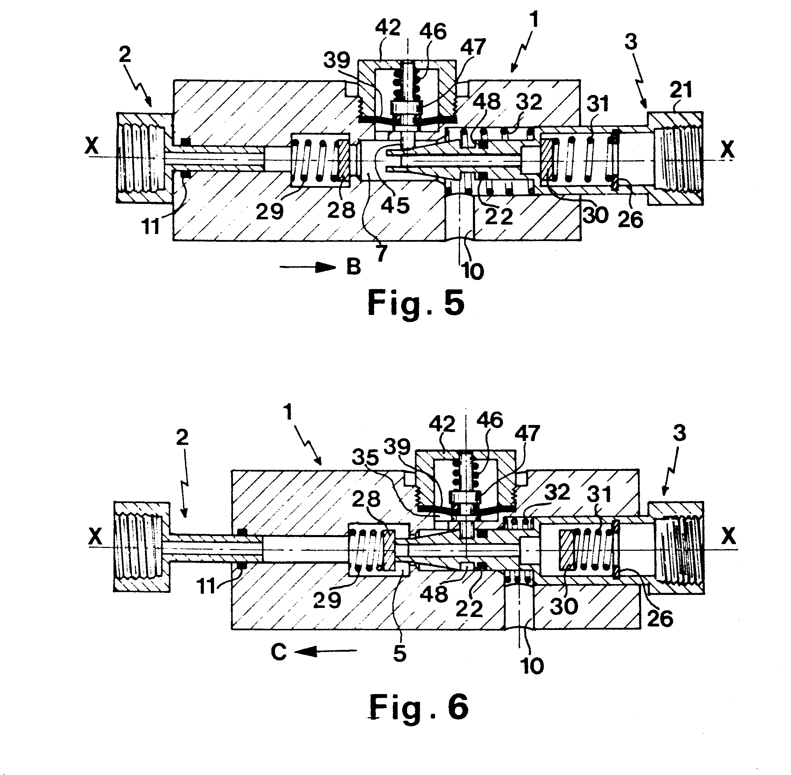

Le fonctionnement de cette variante va être décrit maintenant en se référant aux Fig. 5 et 6.

A la Fig. 5, le dispositif est représenté en position fermée. L'extrémité inférieure 45 de la tige 40 engagée dans le trou 38 dépasse de la paroi de la chambre 7 et repose sur l'extrémité cylindrique 15 de la douille 3. Dans cette position, le clapet 28 repose

6

sur son siège et l'eau du réseau d'adduction ne peut passer.

Pour procéder à un remplissage de l'enceinte, le corps 1 est déplacé vers la droite suivant la flèche B. Au cours de ce mouvement, l'extrémité inférieure 45 de la tige 40 glisse sur la rampe inclinée formée par la partie tronconique 17 de la douille 3, ce qui déplace la tige 40 vers le haut et comprime le ressort 46. Lorsque l'extrémité 45 arrive à l'aplcmb de la saignée 48 de la douille 3, la tige 40 est repoussée vers le bas sous l'action du ressort 46 et son extrémité 45 est engagée dans la saignée 48. Le dispositif est alors verrouillé en position ouverte, représentée à la Fig. 6. L'eau du réseau peut alors s'écouler à travers le dispositif, comme cela a été décrit précédemment, les clapets 28 et 30 étant écartés de leurs sièges respectifs. La membrane 39 en élastomère est soumise alors à deux efforts antagonistes : d'une part, l'effort exercé par le ressort comprimé 46, d'autre part, l'effort dû à la pression régnant dans la chambre 35 et s'exerçant sur la face inférieure de la membrane 39, les chambres 7 et 35 communiquant par le trou 37.

Lorsque, en fin de remplissage, la pression dans les chambres 7 et 35 est telle que l'effort exercé par cette pression est supérieur à l'effort exercé par le ressort 46, la membrane 39 se soulève entraînant avec elle la tige 40, ce qui a pour effet de libérer son extrémité inférieure 45 de la saignée 48 de la douille 3. Le corps 1 peut alors se déplacer vers la gauche suivant la flèche C sous l'action du ressort 32 et reprendre la position fermée. Il est clair que, dans cette variante, si, au cours du remplissage, la pression du réseau d'adduction d'eau venait à chuter, le clapet 30 se fermerait empêchant tout retour de l'eau déjà contenue dans l'enceinte à remplir. Le fonctionnement, en cas de fuite des clapets 28 et 30, est identique à celui précédemment décrit. Ainsi, lorsque l'enceinte sera remplie, les deux clapets 28 et 30 seront en appui sur leurs sièges respectifs 12 et 27 assurant la fermeture automatique du dispositif de commande, fermeture maintenue en fonctionnement normal tant que l'utilisateur n'assurera pas lui-même une nouvelle manoeuvre.

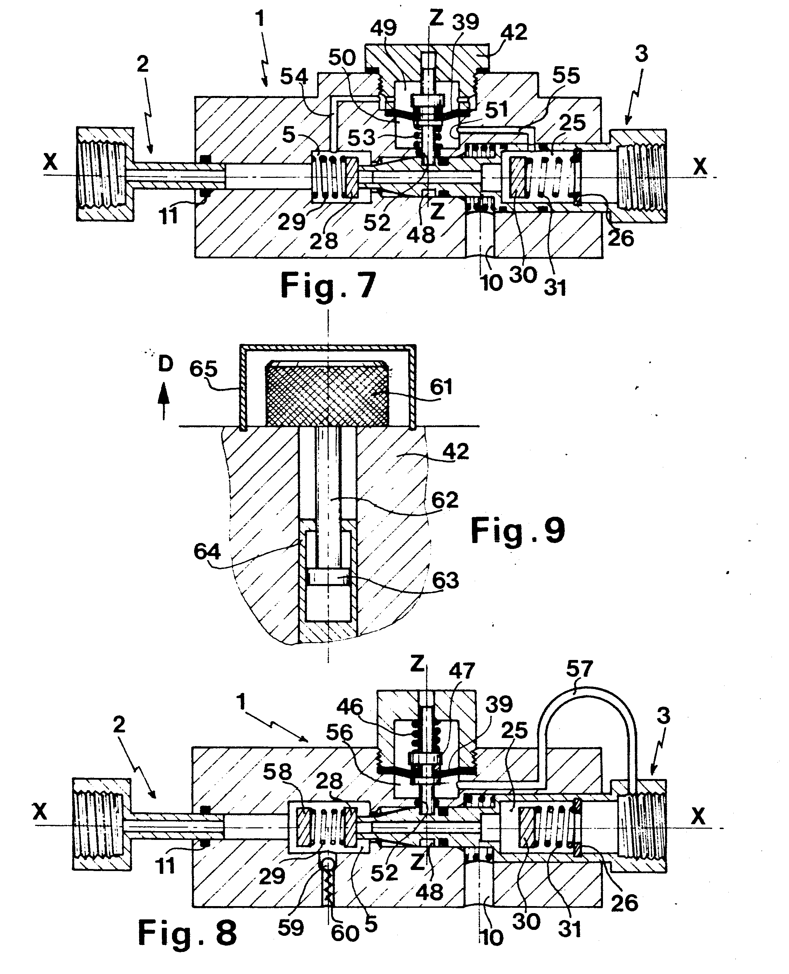

On peut aussi envisager une deuxième variante (Fig. 7) dans laquelle deux chambres étanches 49 et 50 sont ménagées dans le corps : l'une, 49, délimitée par la face supérieure de la membrane 39 et la coupelle 42, l'autre 50, délimitée par la face inférieure de la

7

membrane 39 et un alésage 51 d'axe Z-Z perpendiculaire à l'axe X-X ménagé dans le corps 1 à l'aplomb de la chambre 7. Le fond de l'alésage 51 est percé d'un trou 52 débouchant dans la chambre 7 permettant le passage de la partie inférieure 45 de la tige 40. Un ressort 53 taré concentrique à la tige 40 est interposé entre la face inférieure de la membrane 39 et le fond de l'alésage 51. Les chambres 49 et 50 sont reliées respectivement aux chambres 5 et 25 par des conduits 54 et 55 ménagés dans le corps 1.

Pour procéder à un remplissage, le corps 1 est déplacé vers la droite comme décrit précédemment, jusqu'à ce que l'extrémité inférieure 45 de la tige 40 soit engagée dans la saignée annulaire 48 de la douille 3 comme représenté à la Fig. 7. La pression régnant dans la chambre 5, qui est directement reliée au réseau d'adduction d'eau, est plus élevée que celle régnant dans la chambre 25. Il en résulte que la pression dans la chambre étanche 49 est plus élevée que dans la chambre étanche 50 et que la membrane 39 se déforme vers le bas, la force développée par la membrane étant supérieure à celle du ressort taré 53, maintenant l'extrémité inférieure 45 de la tige 40 en prise dans la saignée 48 de la douille 3, verrouillant le dispositif en position ouverte. En fin de remplissage, les pressions dans les chambres 5 et 25 sont égales. Il en est de même pour les pressions régnant dans les chambres 49 et 50, et la membrane 39 est en équilibre sous l'effet de ces pressions égales. Mais la face inférieure de la membrane 39 est soumise en outre à l'action du ressort 53 qui provoque un déplacement de celle-ci vers le haut, libérant l'extrémité inférieure 45 de la tige 40 de son engagement dans la saignée 48. Le corps 1 peut alors se déplacer vers la gauche sous l'action du ressort 32 et reprendre la position fermée. Si, au cours du remplissage, se produit une chute de pression dans le réseau d'adduction d'eau, un déséquilibre de pression se produira dans les chambres 49 et 50, la pression dans la chambre 50 étant supérieure à celle de la chambre 49. Le processus de fermeture du dispositif sera le même que celui décrit ci-avant et l'eau contenue dans l'enceinte au moment de la chute de pression ne pourra s'écouler à contre-sens et polluer le réseau d'adduction d'eau.

On peut enfin envisager plusieurs autres variantes représentées regroupées sur la Fig. 8, également utilisables dans les exemples de

0130853

8

réalisation décrits et représentés précédemment :

- Ainsi, le trou 37 et le conduit 55 des exemples précédents sont supprimés de manière à former une chambre étanche 56 qui est alors reliée par un conduit 57 flexible à la partie d'extrémité cylindrique 21 de la douille 3. Ainsi, en fin de remplissage, la pression régnant dans l'enceinte déplace la membrane 39 de façon à libérer l'extrémité inférieure 45 de la tige 40 de la saignée 48.

- De même, un clapet supplémentaire 58 peut être disposé dans la chambre 5 destiné à s'appuyer sous l'effet du ressort 29 sur le siège formé par l'épaulement créé par le raccordement du canal 4 et de la chambre 5. Ce clapet a pour effet d'obturer le canal 4 en cas de dépression dans le réseau d'adduction d'eau et d'assurer ainsi une sécurité supplémentaire de fermeture.

- Egalement, un clapet à bille 59 sollicité en position d'ouverture vers la chambre 5 par un ressort 60 peut être disposé dans un orifice d'axe perpendiculaire à l'axe X-X et débouchant, d'une part, dans la chambre 5 entre les clapets 28 et 58 et, d'autre part, à l'extérieur du corps 1. Ce clapet a pour but, en cas de chute brutale de la pression du réseau d'adduction d'eau, de mettre en relation la chambre 5 avec l'extérieur de l'appareil. En fonctionnement normal, la pression régnant dans la chambre 5 assure la fermeture de ce clapet.

Enfin, la tige 40 peut être munie à son extrémité supérieure d'un dispositif de déverrouillage manuel constitué d'un bouton 61 solidaire d'une tige cylindrique 62 terminée par un collet 63 prisonnier d'une cage 64. En position de non-sollicitation, le bouton 61 repose sur la coupelle 42 tandis que le collet 63 est à mi-hauteur de la cage 64. Pour opérer un déverrouillage manuel, il suffit de tirer le bouton 61 dans le sens de la flèche D, le collet 63 vient alors en prise sous l'extrémité supérieure de la cage 64, la tige 40 se déplace dans le sens de la flèche D, libérant l'extrémité inférieure 45 de la saignée 48 de la douille 3. Il faut remarquer que, avec un tel dispositif, un utilisateur inattentif appuyant sur le bouton 61 ne pourra empêcher le déverrouillage automatique du dispositif objet de l'invention à la fin d'un remplissage. Un capot de protection 65 peut recouvrir le bouton 61.

En plus des avantages déjà mentionnés, le dispositif de commande

9

selon l'invention est remarquable par :

- sa compacité, puisque dans un même corps sont intégrés un robinet d'arrêt et un clapet anti-retour ;
- son coût réduit de fabrication, car le nombre de pièces est restreint, leur usinage se limite à des opérations de décolletage et tous les clapets utilisés sont identiques.

10
## REVENDICATIONS

1.- Dispositif de commande de remplissage d'une enceinte fermée par un réseau d'adduction d'eau sous pression, caractérisé en ce qu'il comporte un corps (1) coulissant sur une tubulure (2) et une douille (3) reliées respectivement au réseau et à l'enceinte, ledit corps contenant un clapet d'arrêt (28) à ouverture commandée par la douille (3), et ladite douille (3) renfermant elle-même un clapet anti-retour (30).

2.- Dispositif de commande selon la revendication 1 caractérisé en ce que le corps (1) coulisse sur la douille (3) à l'encontre d'un ressort (32).

3.- Dispositif de commande selon l'une des revendications 1 et 2 caractérisé en ce que le corps (1) comporte un canal central cylindrique (4) assurant un coulissement étanche avec la tubulure (2), relié à une chambre (5) renfermant le clapet d'arrêt (28), et prolongé par une chambre cylindrique (9) de coulissement de la douille (3).

4.- Dispositif de commande selon la revendication 3 caractérisé en ce qu'une chambre (7) du corps (1) située entre la chambre (5) et la chambre (9) communique en position d'ouverture du dispositif de commande par l'extérieur de la douille (3) avec un trou (10) débouchant à l'extérieur du corps (1).

5.- Dispositif de commande selon l'une quelconque des revendications 1 à 4 caractérisé en ce que la douille (3), dont une extrémité (15) munie d'une fente (16) assure la commande en position d'ouverture du clapet d'arrêt (28), comporte un canal central (23) débouchant dans une chambre (25) renfermant le clapet anti-retour (30) d'obturation dudit canal central (23).

6.- Dispositif de commande selon l'une quelconque des revendications 1 à 5 caractérisé en ce qu'il comporte un dispositif de verrouillage et de déverrouillage automatique de la douille (3) dans le corps (1).

7.- Dispositif de commande selon la revendication 6 caractérisé en ce que le dispositif de verrouillage et de déverrouillage est constitué d'une membrane (39) solidaire d'une tige (40) traversant le corps (1), destinée à venir s'engager en position d'ouverture du dispositif de commande dans une saignée (48) de la douille (3) sous l'effet d'un ressort (46), et destinée à se désengager de cette

11

saignée, en fin de remplissage de l'enceinte sous l'effet de la pression de l'eau régnant dans le dispositif de commande.

8.- Dispositif de commande selon la revendication 7 caractérisé en ce qu'un trou (37) met en communication l'intérieur du corps (1) avec la face opposée au ressort de la membrane (39) pour la transmission de la pression de l'eau sur cette membrane.

9.- Dispositif de commande selon la revendication 7 caractérisé en ce qu'un conduit (55-57) met en communication une chambre (56) délimitée par la membrane (39) et située du côté opposé au ressort (46) avec le canal intérieur de la douille (3) pour la transmission de la pression de l'eau sur cette membrane (39).

10.- Dispositif de commande selon la revendication 6 caractérisé en ce que le dispositif de verrouillage et de déverrouillage est constitué d'une membrane (39) délimitant deux chambres (49) et (50) communiquant respectivement par un conduit (54) avec l'intérieur du corps (1) en amont du clapet d'arrêt (28) et par un conduit (55) avec l'intérieur de la douille (3), à l'aval du clapet anti-retour (30), un ressort (53) situé dans la chambre (50) assurant le déplacement de la membrane (39) et de la tige (40) en position de déverrouillage, en fin de remplissage de l'enceinte.

11.- Dispositif de commande selon l'une quelconque des revendications 1 à 10 caractérisé en ce qu'un clapet anti-retour 58 est disposé dans le corps (1) en amont du clapet d'arrêt (28).

12.- Dispositif de commande selon l'une quelconque des revendications 1 à 11 caractérisé en ce qu'un clapet à bille (59) fait communiquer l'intérieur du corps (1) en amont du clapet d'arrêt (28) avec l'extérieur du corps (1).

13.- Dispositif de commande selon l'une quelconque des revendications 7 à 12 caractérisé en ce que la tige (40) est munie d'un dispositif de déverrouillage manuel.

0130853

PI. 1/4

Fig.1

Fig.2

Fig.3

Fig. 4

PI.2/4

Fig. 5

Fig. 6

0130853

Pl.4/4

Fig. 7

Fig. 9

Fig. 8